# EUROPEAN PATENT APPLICATION

(11) **EP 2 888 931 A1**
(43) Date of publication of application: **01.07.2015**
(21) Application number: 13830734.3
(22) Date of filing: 19.08.2013
(51) Int. Cl.: A01F 12/56

(54) **COMBINE HARVESTER ROTOR DRIVE DEVICE**

(30) Priority: 21.08.2012 RU 2012136167
(71) Applicant: Limited Liability Company Combine Plant Rostselmash, Rostov-on-Don 344029 (RU)
(72) Inventor: DEMIRDZHI, Sergey Temilovich, Rostov-onDon 344092 (RU); EVSEEV, Alexander Viktorovich, Rostov-on Don 344045 (RU); BOLSHAKOV, Vadim Viktorovich, Rostov-on Don 344093 (RU); POKOTILO, Sergey Alexandrovich, Rostov-on Don 344019 (RU); GRABKO, Igor Nikolaevich, Rostov-on Don 344045 (RU)
(74) Representative: Cabinet Plasseraud
(86) International application number: PCT/RU2013/000717
(87) International publication number: WO 2014/031036

(57) **Abstract**

The invention relates to agricultural engineering, specifically to devices of the drive and rotation speed adjustment for a threshing rotor in a threshing separating device of rotary grain harvesters. The technical result, intended to be achieved by the invention, is an improvement in the reliability of the rotor drive due to its design simplification, an increase of torque transferred from the engine to the rotor and assured regulation of the speed of the stepless rotor. The specified technical result is obtained due to the fact that, in the arrangement of the grain harvester rotor drive, the system of rotor cleaning from blocking including hydraulic cylinder, ratchet wheel and lock is introduced, moreover, a hydraulic cylinder installed on the rotor drive gearbox housing controls lock blocking of the ratchet wheel by a mechanical linkage, and the ratchet wheel is fixed with a shaft of the inside planetary gear. Selection of transfer ratios for gearbox gears allows reducing the harvester weight due to the exclusion of the transmission gear box from the rotor drive gearbox.

## Description

### Field of the Invention

The invention relates to agricultural engineering, specifically to arrangements of the drive and rotation speed adjustment for a threshing rotor in a threshing separating device of rotary grain harvesters.

### State of the Art

The method and arrangement of rotor drive with V-belt variable-speed gear (harvesters Don-2600, Don-2600R made by Combine Plant Rostselmash LLC, etc.) are known [1].

Arrangement of the rotor drive using summing gearbox with transmission gear, in which speed is changed within the range of two stages (harvester Torum-740 made by Combine Plant Rostselmash LLC, etc.) [2, 3].

The closest analogue of the claimed arrangement of rotor drive and speed change is the system of harvester Torum740 according to patent RU2370695C2 [3].

The mechanism of a rotor drive is provided by torque transfer from an internal-combustion engine via a transfer gearbox and cardan shaft to summing gearbox and then depending on a chosen working range of the rotor drive gearbox transmission gear rotor is actuated with speed adjustment within the operating range of rotor speeds. Moreover, the rotor is coaxially fixed with the output shaft of the rotor drive gearbox.

The disadvantages of the closest analogue of the claimed arrangement of the rotor drive are as follows:
1) low reliability due to arrangement design complexity and the necessity of gear shifting when choosing rotor speed values being optimum under harvesting conditions, that is impossible due to gearbox gear tooth on tooth and unacceptable while emergency starting after rotor blocking, as slipping out, i.e. space blocking between rotor and cage by reverse rotor rotation is eliminated only at first (from two) speed range;
2) insufficient torque transferred from engine to rotor conditioned by the fact that while slipping out hydrostatic motor is not blocked and its torque is a limiter of transfer moment from engine to rotor;
3) coaxial fixed location (connection) of output gearbox shaft and rotor rotation axis, that reduces the reliability of connection under impact loads.

### Summary of the Invention

The technical result, intended to be achieved by the invention, is an improvement in the reliability of the rotor drive due to its design simplification, an increase in torque transferred from the engine to the rotor and an assured regulation of the speed of the stepless rotor.

The specified technical result is obtained due to the fact that in an arrangement of a grain harvester rotor drive containing mechanically connected transfer gearbox driven from harvester engine, coupling clutch, cardan shaft and rotor drive gearbox including hydraulically connected hydrostatic pump and hydrostatic motor, bevel gear, idler gear, planetary gear, output shaft with hub for coaxial joining with rotor, moreover, hydrostatic pump is mechanically connected with cardan shaft and hydraulically connected with hydrostatic motor, hydrostatic motor is mechanically connected with inside planetary gear, bevel gear, idler gear and planetary gear are mechanically connected with output shaft the system of rotor cleaning from blocking consisting of hydraulic cylinder with lock and ratchet wheel is introduced, moreover, while activation the lock blocks ratchet wheel fixed with central planetary gear by shaft, planetary gear output shaft is connected with rotor by splined cap, and stepless threshing rotor speed is changed due to selection of transfer ratios of hydrostatic motor speed and inside planetary gear. Moreover, the output shaft of the rotor drive gearbox is confined to the rotor rotation axis by a splined cap and toothed coupling at anngle, hydrostatic motor speed change is obtained due to operating fluid flow change by means of a hydrostatic pump in the hydraulic system.

### Brief Description of Drawings

The claimed arrangement is illustrated by the following drawings.
Fig. 1 shows a consolidated structural layout of a rotor drive arrangement; and
Fig. 2 shows a detailed structural layout of the rotor drive arrangement.

### Implementation of Invention

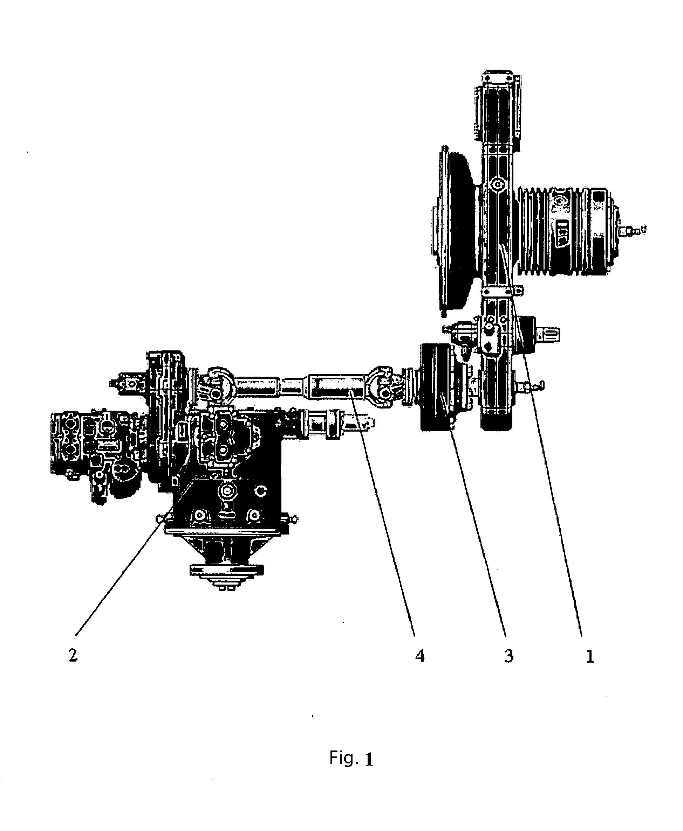

A consolidated structural layout of the rotor drive arrangement from an internal-combustion engine includes the following structural assemblies (referring to Fig. 1):
1 - transfer gearbox;
2 - rotor drive gearbox;
3 - friction clutch coupling;
4 - cardan shaft.

The motion of the rotor drive is transmitted from the internal-combustion engine via the transfer gearbox 1 to the rotor drive gearbox 2, via the friction clutch coupling 3 connected to the cardan shaft 4.

This mechanism engages the grain harvester rotor drive with the hydrostatic mechanical gear. Moreover, the hydrostatic mechanical gear brings the rotor into operation and makes stepless rotor speed adjustment possible. A friction clutch coupling is brought into operation by the transfer gearbox. The friction clutch coupling output is mechanically connected with a rotor drive gearbox input. Then, a shaft of a hydrostatic pump and bevel gear to planetary gear hollow wheel are brought into rotation via a cylindrical gear. The hydrostatic pump is hydraulically connected to a hydrostatic motor. The hydrostatic motor is connected with a bevel gear of a central planetary gear. A pinion cage (output shaft) of the planetary gear is connected by a spline joint to the rotor. A ratchet mechanism is installed on a shaft of the central planetary gear. In the gearbox casing provision is made for a hydraulic cylinder to stop the ratchet mechanism with a lock in case of emergency the rotor slipping out.

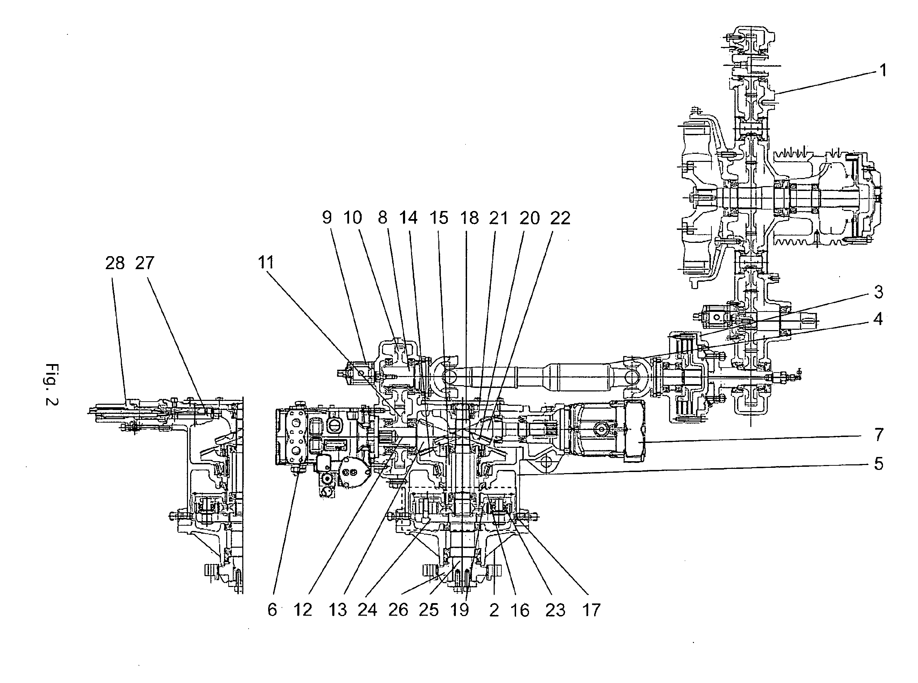

A detailed structural layout of the rotor drive arrangement from the engine includes the following assemblies (referring to Fig. 2):
1 - transfer gearbox;
2 - rotor drive gearbox;
3 - friction clutch coupling;
4 - cardan shaft;
5 - housing;
6 - hydrostatic pump;
7 - hydrostatic motor;
8 - input shaft;
9 - hydraulic pump of cooling system;
10, 11 - cylindrical gears;
12 - drive shaft;
13, 14 - bevel gearwheels;
15 - hollow shaft;
16 - outside gear;
17 - planetary gear;
18 - shaft;
19 - central gear;
20 - bevel gearwheel;
21 - ratchet wheel;
22 - bevel gearwheel;
23 - satellite gear;
24 - pinion cage;
25 - output shaft;
26 - splined cap;
27 - lock;
28 - hydraulic cylinder.

The arrangement operates as follows. The transfer gearbox 1 brings the friction clutch coupling 3 into operation, which engages the rotor drive gearbox 2 via a cardan shaft 4 in its turn. A hydrostatic pump 6 and a hydrostatic motor 7, which are mechanically connected with the rotor drive, are fastened to a housing 5 of the rotor drive gearbox 2. The hydrostatic pump 6 is hydraulically connected (with hydraulic tube assemblies, not shown in Fig. 2) with the hydrostatic motor 7 in order to bring it into operation.

The rotor drive gearbox 2 has input in the form of an input shaft 8, which brings cardan shaft 4 into operation. An input shaft 8 of the rotor drive gearbox 2 is directly connected with a shaft of a hydraulic pump for a cooling system 9. On input shaft 8 is a cylindrical gear 10, which brings into rotation the second cylindrical gear 11 installed on a drive shaft 12 of the hydrostatic pump 6 on which a bevel gearwheel 13 is installed without cranking. The bevel gearwheel 13 brings the second bevel gearwheel 14 into operation, which is installed on a hollow shaft 15 and engages the outside gear 16 and the planetary gear 17.

On a shaft 18 is a planetary gear 17 and central gear 19, bevel gearwheel 20 and ratchet wheel 21 which are fixed without rotation. The bevel gearwheel 20 engages another bevel gearwheel 22, which is fixed on the shaft of the hydrostatic motor 7 without rotation. Accordingly, gearwheels 20 and 22 form an angular drive.

The planetary gear 17 has several satellite gears 23, which are located between the outside gear 16 and the central gear 19 and are fixed rotationally on satellite gear pinion cage 24. The pinion cage 24 of the satellite gears 23 has an output shaft 25, which provides the output of the planetary gear 17, on which splined cap 26 is installed, due to which the rotor can skew with regard to the output shaft 24, protecting the structure from impact loads.

A ratchet wheel 21 is used to block the planetary gear 17 and the central gear 19 while emergency starting after the rotor has been blocked by processing a mass in the thresher. In order to stop while starting, a lock 27 pulled out by hydraulic-cylinder rod 28 installed on the gearbox casing 5 is engaged with the ratchet wheel 21. Due to this mechanism all torque from the engine is imposed on the rotor contrary to the present invention, in which the hydrostatic motor is not blocked and, thus, limits torque transferred to the rotor.

Arrangements of locking mechanism rotor drive consisting of hydraulic cylinder 28, ratchet wheel 21 and lock 27, which engages hydraulic cylinder 28 interlocking hydrostatic motor 7 while emergency starting and intended to transfer higher torque from the engine to the rotor to slip out the latter after blocking, ensure a more reliable slipping out process. Selection of transfer ratios for gearbox gears allows reducing harvester weight due to the exclusion of the gearbox from the rotor drive gearbox and excludes the possibility of gearwheel tooth on tooth when range shifting, that allows for the operator to adjust rotor speed, as well as eliminate blocking of space between rotor and cage, not leaving working place. Lubrication of structural assemblies for the claimed arrangement without pressure discharge improves the reliability of the arrangement.

### List of Used References

1. Self-Propelled Grain Harvesters Don-2600 and Rice and Grain Harvesters Don-2600-R. Operating and Maintenance Instruction RSM-12 OI. - Rostov-on-Don: Combine Plant Rostselmash LLC, 2000.
2. Self-Propelled Grain Harvester RSM-181 Torum-740. Operating and Maintenance Instruction RSM-181 OI. - Rostov-on-Don: Combine Plant Rostselmash LLC, 2008.
3. Patent RU2370695C2, publication 20.10.2009.

## Claims

1. An arrangement of a grain harvester rotor drive containing a mechanically connected transfer gearbox driven from a harvester engine, coupling clutch, drive shaft and rotor drive gearbox including hydraulically connected hydrostatic pump and hydrostatic motor, bevel gear, idler gear, planetary gear, output shaft with a hub for coaxial joining with the rotor, wherein the hydrostatic pump is mechanically connected with the drive shaft and hydraulically connected with the hydrostatic motor, wherein the hydrostatic motor is mechanically connected with an inside planetary gear, bevel gear, idler gear and planetary gear are mechanically connected with an output shaft, **characterized in that** the system of cleaning from blocking consisting of hydraulic cylinder with lock and ratchet wheel is introduced, moreover, while activation of the lock blocks a ratchet wheel fixed to a central planetary gear by a shaft, planetary gear output shaft is connected with rotor by splined cap, and stepless threshing rotor speed is changed due to selection of transfer ratios of hydrostatic motor speed and inside planetary gear.

2. The arrangement as defined in claim 1 **characterized in that** the output shaft of the rotor drive gearbox is confined to a rotor rotation axis by a splined cap and a toothed coupling at an angle.

3. The arrangement as defined in claim 2 **characterized in that** a change in a hydrostatic motor speed is obtained due to a change of pressure by the hydrostatic pump in the hydraulic feed system.
